# EUROPÄISCHE PATENTSCHRIFT

(11) **EP 3 245 348 B1**
(45) Veröffentlichungstag und Bekanntmachung des Hinweises auf die Patenterteilung: **09.01.2019**
(21) Anmeldenummer: 15794076.8
(22) Anmeldetag: 30.10.2015
(51) Int. Cl.: E04C 2/54, E04C 1/42

(54) **LICHTLEITBLOCK MIT LEUCHTRAHMEN**
LIGHT GUIDING BLOCK HAVING A LUMINOUS FRAME
BLOC PHOTOCONDUCTEUR À CADRE LUMINEUX

(30) Priorität: 12.01.2015 DE 202015000056 U
(43) Veröffentlichungstag der Anmeldung: 22.11.2017
(73) Patentinhaber: Christandl, Dieter, 8160 Weiz (AT); Christandl, Josef, 8181 St. Ruprecht/Raab (AT); Hofer, Robert, 8181 St. Ruprecht an der Raab (AT)
(72) Erfinder: CHRISTANDL, Dieter, 8160 Weiz (AT); CHRISTANDL, Josef, 8181 St. Ruprecht/Raab (AT); HOFER, Robert, 8181 St. Ruprecht/Raab (AT); HAIDER, Alexander, 8200 Gleisdorf (AT); FISCHER, Oliver, 6850 Dornbirn (AT)
(74) Vertreter: Riebling, Peter
(86) Internationale Anmeldenummer: PCT/EP2015/002176
(87) Internationale Veröffentlichungsnummer: WO 2016/112930

(56) Entgegenhaltungen:
- EP-A1- 2 604 766
- EP-A1- 2 784 237
- EP-A2- 2 179 105
- WO-A2-2006/070214
- DE-A1-102011 008 853
- DE-A1-102013 103 037
- DE-U1-202011 110 213

## Beschreibung

Die Erfindung betrifft einen Lichtleitblock nach dem Oberbegriff des Schutzanspruches 1.

Lichtleitblöcke, bestehend aus einer Vielzahl von in einem aushärtbaren Füllmaterial eingegossenen Lichtleitstäben, sind in vielfältigen Ausführungsformen bekannt geworden. Beispielsweise ergibt sich aus der US 4 570 207 A, dass das aushärtbare Füllmaterial ein Betonmaterial ist, welches hohe Lasten übertragen kann und die darin eingegossenen Lichtleitstäbe jeweils an den beiden gegenüberliegenden Flachseiten des Lichtleitblocks sichtbar sind.

Voraussetzung bei der Herstellung eines Lichtleitblocks nach der US 4 570 207 A ist allerdings, dass der Lichtleitblock in eine Form eingelegt wird, in der bereits schon die Lichtleitstäbe angeordnet sind, und die Form dann nachfolgend mit dem aushärtbaren Füllmaterial ausgefüllt wird.

Als Beispiel für eine derartige Form wird die EP 2 179 105 B1 angegeben. Dort ist in Figur 6 eine halb offene Wanne dargestellt, in deren Innenraum die Lichtleitstäbe in einer Haltestruktur fixiert eingesetzt sind.

Nachteil dieser Anordnung ist der hohe Aufwand beim Herstellen eines Lichtleitblocks, denn es müssen zunächst die Lichtleitstäbe in einer geeigneten Haltestruktur fixiert werden, die dann in der Gießform verankert werden muss, um dann den Block auszugießen und dabei dafür zu sorgen, dass sich die gesamte Struktur in der auszugießenden Wanne aufgrund des einlaufenden Füllmaterials nicht verbiegt, verformt oder sogar beschädigt wird.

Aus diesem Grund sieht die genannte Druckschrift gemäß Figur 7 eine durch Zugschrauben unterteilte Gießform vor, die dem hohen Formdruck beim Gießen standhalten soll.

Demnach besteht der Nachteil bei der Herstellung eines derartigen Lichtleitblocks in einem hohen Arbeitsaufwand, denn nach dem Aushärten des Lichtleitblocks in der Form muss der Lichtleitblock aus der Form entfernt werden, die Form wird dann wieder gereinigt, die auszugießenden Formflächen mit einem Trennmittel behandelt, um dann einen neuen Lichtleitblock auszugießen.

Der Erfindung liegt deshalb die Aufgabe zugrunde, einen Lichtleitblock der eingangs genannten Art so weiterzubilden, dass ein wesentlich geringerer Herstellungsaufwand bei der Herstellung eines Lichtleitblocks gegeben ist, und dass zusätzlich noch weitere Leuchteigenschaften an einem solchen Lichtleitblock erzielbar sind.

Zur Lösung der gestellten Aufgabe ist die Erfindung durch die technische Lehre des Anspruches 1 gekennzeichnet.

Merkmal der Erfindung ist, dass die Lichtleitstäbe nunmehr erfindungsgemäß als Kunststoffspritz- oder -formteile ausgebildet sind und an einer oder mehreren Flächen einer mindestens teilweise oder abschnittsweise aus lichtleitendem Kunststoff bestehenden Wanne angeformt sind.

Mit dieser technischen Lehre wird ein vollkommen neuer Weg bei der Herstellung von Lichtleitblöcken beschritten, denn die Wanne selbst ist nun Teil des Lichtleitblocks, und erfindungsgemäß sind mindestens einige oder alle Flächen der aus einem Kunststoff bestehenden Wanne abschnittsweise oder teilweise lichtleitend, sodass ein solcher Lichtleitblock im eingebauten Zustand zusammen mit den Wänden der Wanne leuchtet.

Die Wanne bildet demnach eine verlorene Schalung für den Lichtleitblock, weil sie am ausgehärteten Gießmaterial des Lichtleitblocks haften bleibt und mit dem Lichtleitblock verbaut wird.

In einer bevorzugten Ausgestaltung sind die Lichtleitstäbe werkstoffeinstückig als Spritzgussteil an die gleichfalls im gleichen Spritzgussverfahren hergestellte Wanne angespritzt, sodass die Wanne und die daran angeformten Lichtleitstäbe in ein und demgleichen Spritzgussvorgang hergestellt werden. Das Spritzgusswerkzeug ist in diesem Fall einteilig, weil Wanne und Lichtstäbe in einem einzigen Arbeitsgang gespritzt werden.

In einer anderen Ausgestaltung der Erfindung kann es vorgesehen sein, dass zunächst die Wanne aus einem Kunststoffspritzgussteil hergestellt wird, und dass bei noch nicht ausgehärtetem Kunststoff der Wanne nunmehr die Lichtleitstäbe an die Flächen der Wanne angespritzt werden, um so wiederum ein lichtleitendes, werkstoffeinstückiges, durchgehendes Kunststoffspritzgussteil zu erhalten. Das Spritzgusswerkzeug ist in diesem Fall zweiteilig ausgebildet und besteht aus einem sogenannten Folgewerkzeug, weil Wanne und Lichtleitstäbe kurz hintereinander in dem Spritzgusswerkzeug hergestellt werden.

Im Schutzanspruch 1 ist angegeben, dass die Flächen der Wanne mindestens teilweise oder abschnittsweise aus einem lichtleitenden Kunststoff bestehen.

Der Begriff "teilweise bestehen" bedeutet, dass es nicht notwendig ist, den Kunststoff der Wanne aus dem gleichen lichtleitenden Material wie den Kunststoff der daran angeformten Lichtleitstäbe zu fertigen.

Gemäß dem vorstehend beschriebenen Herstellungsvorgang kann zunächst die Wanne aus einem ersten Kunststoffmaterial gefertigt werden, welches zum Beispiel auch eingefärbt, transluzent, teilweise transparent oder in anderer Weise lichtleitend ausgebildet ist, um dann die Lichtleitstäbe aus dem gleichen oder einem anderen Kunststoffmaterial an die Wände der Wanne anzuformen, um so einen werkstoffeinstückigen Verbund zwischen den Lichtleitstäben und den Wänden der Wanne zu erreichen.

Wenn die Lichtleitstäbe aus einem anderen Kunststoffmaterial sind, sind sie zum Beispiel nicht eingefärbt, während das Kunststoffmaterial der Wanne eingefärbt ist.

Ebenso kann das Kunststoffmaterial der Wanne aus einem anderen Kunststoff bestehen als vergleichsweise die dort angespritzten Lichtleitstäbe.

Der Begriff "abschnittsweise bestehend" bedeutet, dass es nicht notwendig ist, dass alle Flächen der Wanne aus einem lichtleitenden Material bestehen. Es kann zum Beispiel die Bodenwand der Wanne aus einem lichtleitenden Material bestehen, um so in besonders günstiger Weise eine an der Bodenwand oder unterhalb der Bodenwand angeordnete Lichtquelle auf alle werkstoffeinstückig mit der Bodenwand verbundenen Lichtleitstäbe zu lenken. Dabei erfolgt eine Lichteinleitung auf die an der Bodenseite der Wanne angeformten Lichtleitstäbe in besonders effektiver Weise, weil sich das eingestrahlte Licht über die gesamte Fläche der Bodenseite verteilt und diese mitleuchtet.

Bei diesem Ausführungsbeispiel ist es nicht lösungsnotwendig, wenn auch die umlaufenden Wände der Wanne aus einem lichtleitenden Kunststoff bestehen; eine solche Ausführung wird jedoch bevorzugt.

Unter dem Begriff "Wanne" wird demnach ein einseitig offenes Behältnis verstanden, das die Schalungsform für eine dort einzugießende, aushärtbare Masse bildet. Somit werden unter dem Begriff "Wanne" alle mindestens einseitig offenen Schalungsformen verstanden, unabhängig davon, ob sie ein- oder mehrteilig sind. Eine mehrteilige Wanne besteht beispielsweise aus einer Bodenwand an der die Seiten- Rück- und Stirnwände lösbar befestigbar sind.

In einer anderen Ausgestaltung der Erfindung kann es vorgesehen sein, dass sowohl die Bodenwand als auch alle (oder einige der) umlaufenden Wände der Wanne aus einem lichtleitenden Kunststoff bestehen, wodurch sich der im Titel dieser Erfindung angegebene Leuchtrahmen eines Lichtleitblockes ergibt.

Dies bedeutet, dass die Wanne insgesamt leuchtet; und wenn ein solcher Lichtleitblock mit einer Wanne aus lichtleitendem Material in eine Bodenfläche eingebaut wird, ergibt sich ein leuchtender, Licht aussendender, umlaufender Rahmen für den Lichtleitblock, der aus den Licht aussendenden Stirnseiten der umlaufenden Wände der Wanne gebildet ist.

Der Schutzanspruch 1 lässt im Übrigen offen, an welchen Flächen der Wanne die Lichtleitstäbe angeformt sind. Es wird zwar bevorzugt, wenn die Lichtleitstäbe an der Bodenwand der Wanne angeformt sind und so eine werkstoffeinstückige Verbindungsfläche aus dem Kunststoff des Lichtleitstabes mit dem Kunststoff der Bodenwanne bilden.

In einer anderen Ausgestaltung kann es jedoch auch vorgesehen sein, dass an den Wänden der Wanne noch zusätzliche Lichtleitstäbe angeformt sind, oder dass allein an den Wänden der Wanne Lichtleitstäbe angeformt sind, die so abgewinkelt sind, dass sie ebenfalls eine Licht aussendende, obere Sichtseite des Lichtleitblockes bilden.

In einer Weiterbildung kann es auch vorgesehen sein, dass ein Teil der Lichtleitstäbe an der Bodenwand der Wanne angeformt sind, und ein anderer Teil der Lichtleitstäbe an den Seitenwänden der Wanne angeformt sind. Wenn die Seitenwände der Wanne eingefärbt sind und die Bodenwand nicht, ergibt sich somit ein unterschiedlicher Leuchteindruck der Lichtleitstäbe, weil die an der Seitenwand anschließenden Lichtleitstäbe ein andersfarbiges Licht in Richtung zur Sichtseite des Lichtleitblockes lenken als vergleichsweise die an der Bodenwand angeformten Lichtleitstäbe.

Ebenso wird es bevorzugt, wenn die Bodenwand insgesamt aus einem lichtleitenden Kunststoff besteht. Hierauf ist die Erfindung jedoch nicht beschränkt. Es kann auch vorgesehen sein, dass die Bodenwand nur teilweise (also nicht vollständig transparent) oder auch nur abschnittsweise lichtleitend ausgebildet ist, und dass in diesen Bereichen die Lichtleitstäbe angeformt sind.

In einer Weiterbildung der Erfindung kann es im Übrigen vorgesehen sein, dass der Licht aussendende Rahmen des Lichtleitblockes nicht umlaufend ausgebildet ist. Es können nach der Herstellung des Lichtleitblockes mit dem Eingießen in die Wanne einige Wände der Wanne wieder entfernt werden, um zum Beispiel nur die obere Leiste und die gegenüberliegende untere Leiste des Lichtleitblockes zum Aufleuchten zu bringen, was bedeutet, dass die Seitenwände nachträglich entfernt wurden, und nur noch die Stirnwand und die gegenüberliegende Rückwand der Wanne den Lichtrahmen bilden.

Für die Lichteinleitung in einem derartigen Lichtleitblock, bei dem die Wanne als verlorene Schalung selbst mindestens einen Teil des Lichtleiters darstellt, gibt es verschiedene Möglichkeiten der Lichterzeugung.

In einer ersten Ausgestaltung der Erfindung ist es vorgesehen, dass zur Lichterzeugung an der Bodenwand der Wanne diese Bodenwand mit einer Anzahl von Licht erzeugenden Lichtstäben koppelbar ist.

Derartige Lichtstäbe können zum Beispiel eine Kette von miteinander elektrisch verbundenen LEDs sein oder auch, wie zum Beispiel, Fluoreszenz-Leuchtelemente, Glühdrähte und dergleichen mehr.

Derartige, als Lichtstäbe ausgebildete Leuchtelemente werden bevorzugt mit der Bodenwand des Lichtleitblocks gekoppelt, und hierzu ist erfindungsgemäß vorgesehen, dass die einzelnen, gerade ausgebildeten Lichtstäbe in zugeordnete, nach unten geöffnete Längsnuten in die Bodenwand eingelegt oder eingeklemmt werden und jeweils in Serie miteinander verbunden werden, um so eine LED-Leuchtkette an der Bodenseite des Lichtleitblocks zu bilden.

In einer anderen Ausgestaltung der Erfindung ist es vorgesehen, dass die Licht aussendende Fläche an der Bodenwand der Wanne aus einer Leuchtplatte besteht, in der eine Anzahl von matrixartig angeordneten Leuchtelementen, wie zum Beispiel LEDs, angeordnet sind, und dass diese Lichtplatte lösbar mit der Bodenwand des Lichtleitblocks koppelbar ist.

Zu diesem Zweck wird es bevorzugt, dass die Lichtleitplatte seitliche, rahmenartig umlaufende Rastschenkel aufweist, die in eine zugeordnete, rahmenartig umlaufende Rastnut an der Bodenwand der Wanne einrastbar sind.

Selbstverständlich reicht es für die Kopplung der Lichtplatte auch aus, an einigen Stellen entsprechende Rast- oder Verriegelungspunkte vorzusehen, wobei die Lichtplatte bevorzugt lösbar mit der Bodenwand der Wanne verbunden ist.

Es wird ferner bevorzugt, wenn in der Wanne noch weitere Öffnungen vorhanden sind, um zu gewährleisten, dass von oben eindringende Feuchtigkeit, die eventuell in das Füllmaterial eindringt, nach unten wieder abgelassen wird.

Bei der Erfindung ist demnach wesentlich, dass die Wanne als Leuchtrahmen einen vollkommen neuen Leuchteindruck bei der Verbauung eines derartigen Lichtleitblockes ergibt. Dies war im Stand der Technik nicht bekannt. Neben den hier beschriebenen Arten der Lichterzeugung ist es ebenso möglich, in die noch nicht ausgegossene Wanne Lichtstäbe oder Leuchtelemente einzulegen und mit dem Füllmaterial auszugießen.

In einer bevorzugten Ausgestaltung der Erfindung besteht das Füllmaterial aus einem aushärtbaren Beton. Hierauf ist die Erfindung nicht beschränkt. Es kann jegliches beliebiges Füllmaterial verwendet werden, welches aushärtbar ist. Demzufolge können auch Kunststoffschäume, Gips oder andere aushärtbare Füllmaterialien verwendet werden.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisiert die Draufsicht auf einen Lichtleitblock im noch nicht ausgegossenen Zustand
Figur 2: der Lichtleitblock nach Figur 1 gemäß dem Schnitt der Linie A-A
Figur 3: der Lichtleitblock nach Figur 2 im ausgegossenen Zustand
Figur 4: eine gegenüber Figur 3 abgewandelte Ausführungsform eines Lichtleitblocks
Figur 5: ein Detail C nach Figur 2
Figur 6: ein Lichtleitblock als Detaildarstellung im noch nicht ausgegossenen Zustand
Figur 7: der Lichtleitblock nach Figur 2 mit Darstellung der Lichterzeugung über Lichtstäbe
Figur 8: Schnitt gemäß der Linie VIII-VIII in Figur 7
Figur 9: eine gegenüber Figur 7 abgewandelte Ausführungsform, bei der zur Lichterzeugung eine Lichtplatte verwendet wird
Figur 10: in auseinandergezogener Darstellung der Schnitt gemäß der Linie X-X in Figur 9
Figur 11: die Draufsicht auf die Sichtseite von in einer Fläche eingebauten Lichtleitblöcken mit Darstellung des sich hieraus ergebenden Leuchtrahmens

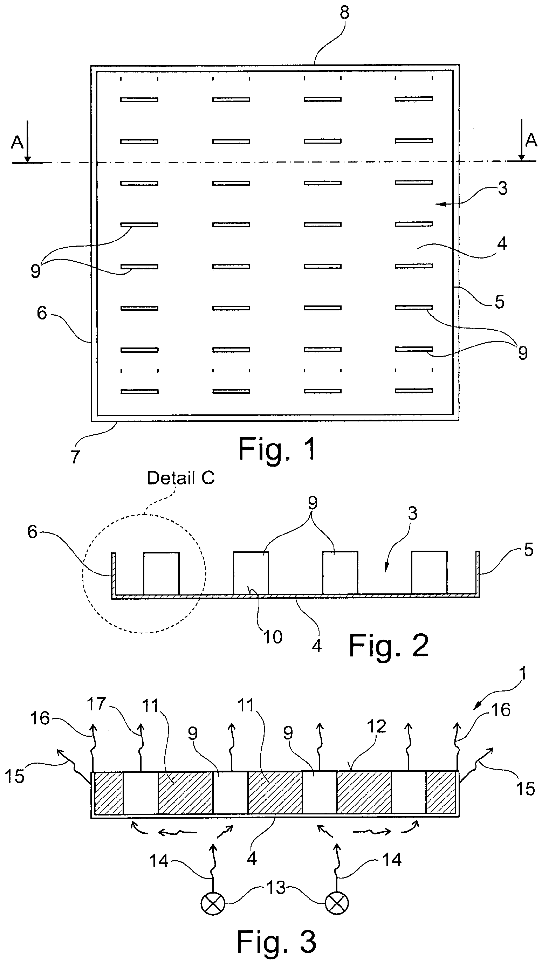

In den Figuren 1 und 2 ist schematisiert ein Lichtleitblock 1 dargestellt, der aus einem Kunststoffspritzgussteil besteht, welches in sich aus einem lichtleitenden Kunststoff gebildet ist.

Der Lichtleitblock 1 besteht aus einer Wanne 3, die aus einer Bodenwand 4 besteht, an die Seitenwände 5, 6 angeformt sind. Nach vorne und hinten wird die Wanne 3 durch jeweils eine Stirnwand 7 und eine Rückwand 8 abgeschlossen.

Im gezeigten Ausführungsbeispiel hat der Lichtleitblock 1 Außenabmessungen von zum Beispiel 396 x 396 mm, und die Breite der dort angeordneten Lichtleitstäbe 9 beträgt etwa 40 mm und der gegenseitige Abstand zwischen den Lichtleitstäben 9 etwa 60 mm.

Die Dicke der Rückwand 8 und aller Seitenwände beträgt etwa 2 mm.

Die Höhe der Wanne beträgt etwa 51 mm und die Stärke der Bodenwand etwa 1,5 mm.

Aus Figur 2 ergibt sich, dass auf der Bodenwand 4 eine Vielzahl von Lichtleitstäben 9 werkstoffeinstückig angeformt sind, und zwar über die dort gezeigten Verbindungsflächen 10.

Es wurde in der allgemeinen Beschreibung darauf hingewiesen, dass die Lichtleitstäbe 9 in ein und demgleichen Spritzgussvorgang zusammen mit der Wanne 3 hergestellt werden können, oder - in einer anderen Ausgestaltung - in einem sogenannten Folgewerkzeug, bei dem zunächst die Wanne 3 gespritzt wird, und dann an die Bodenwand 4 der hergestellten Wanne noch nachträglich die Lichtleitstäbe 9 im Spritzgussverfahren angeformt sind.

Wichtig ist, dass sich ein günstiger optischer Übergang an den Verbindungsflächen 10 ergibt, um dort möglichst ungestört eine Lichtleitung zwischen der Bodenwand 4 und den darauf aufsetzenden und angeformten Lichtleitstäben 9 zu ermöglichen.

Die Figur 3 zeigt einen nach Figuren 1 und 2 hergestellten, fertig ausgegossenen Lichtleitblock 1. Dort ist erkennbar, dass er mit einem aushärtbaren Füllmaterial 11 ausgegossen ist. Lediglich schematisiert sind zwei voneinander beabstandet angeordnete Lichtquellen 13 angegeben, die ein Licht in den Pfeilrichtungen 14 gegen die Bodenwand 4 leiten.

Dieses Licht wird über die lichtleitende Bodenwand 4 in allen Richtungen hin verteilt, sodass es einerseits - in den eingezeichneten Pfeilrichtungen - in die Unterseite der Lichtleitstäbe 9 eindringt und andererseits jedoch auch über die Wände 4-8 seitlich austritt.

Somit leuchten die umlaufenden Wände 5-8 sowohl in Pfeilrichtung 16 nach oben als auch in Pfeilrichtung 15 zur Seite, sodass sich - je nach Vorhandensein der Wände 5-8 - ein umlaufender oder nicht-umlaufender Leuchtrahmen um den Lichtleitblock 1 ergibt.

Die Hauptlichtaussendung wird in Pfeilrichtung 17 über die Licht abgebenden Stirnseiten der nach oben zur Sichtseite gerichteten Lichtleitstäbe 9 erfolgen.

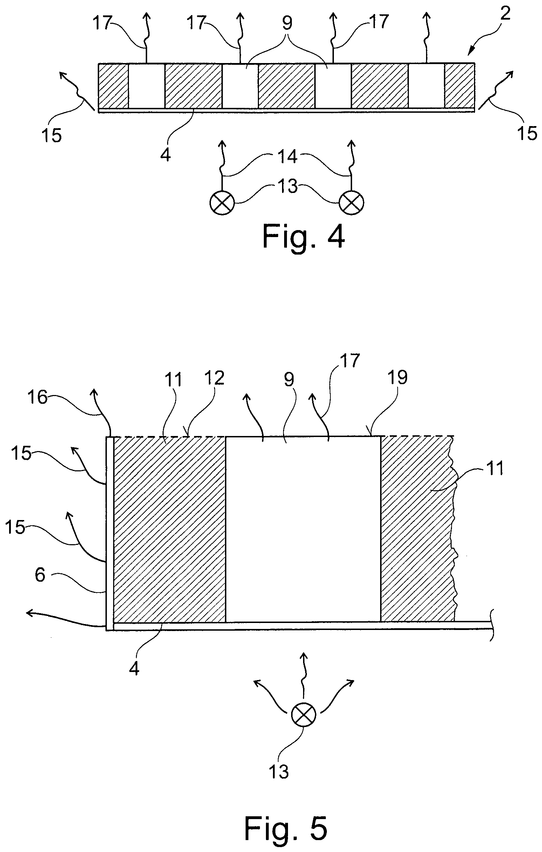

Die Figur 4 zeigt als gegenüber Figur 3 abgewandeltes Ausführungsbeispiel, dass auch einige umlaufende Wände, zum Beispiel die Seitenwände 5, 6, entfallen können, sodass lediglich die Bodenwand 4 vorhanden ist und auch die Stirnwand 7 und/oder die Rückwand 8, sodass nur noch im Bereich der vorhandenen Wände ein Leuchtrahmen gegeben ist, während die übrigen Wandflächen entfallen.

Die Figur 5 zeigt als vergrößertes Detail C aus der Figur 2, dass die Lichtaussendung über sämtliche Flächen der Wände 4-8 erfolgt.

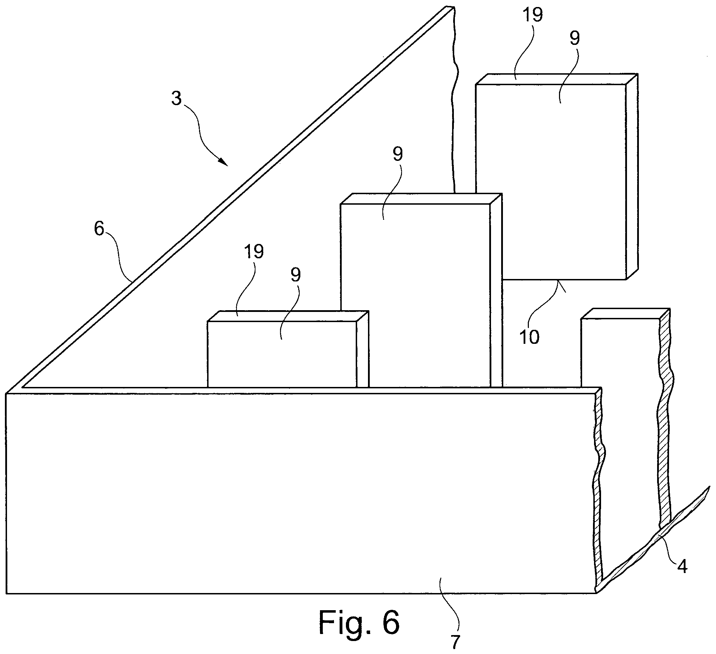

Die Figur 6 zeigt schematisiert eine Wanne 3 nach der Erfindung, die noch nicht mit Füllmaterial 11 ausgegossen ist.

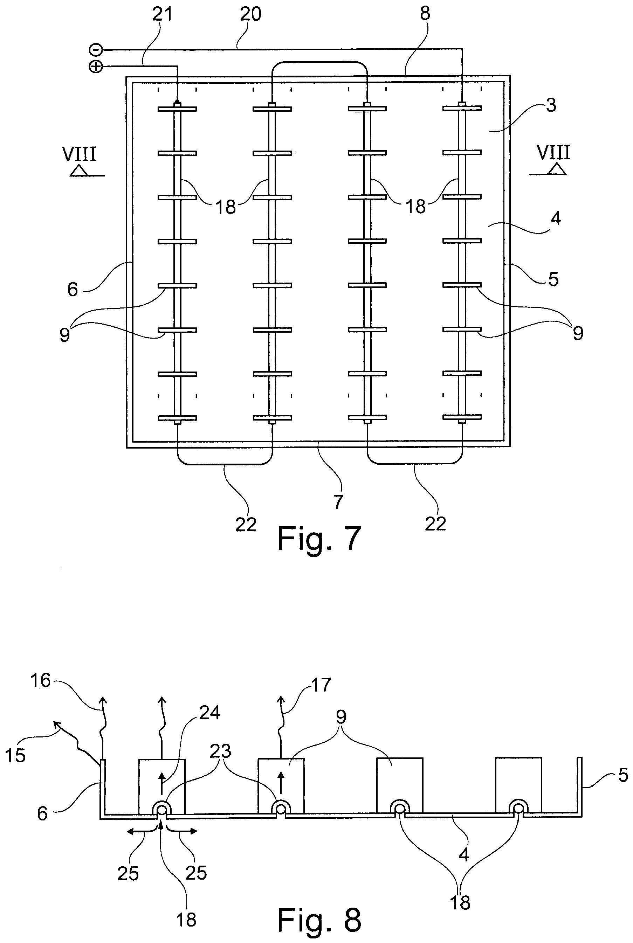

Die Figur 7 zeigt als erste Möglichkeit der Lichterzeugung sogenannte Lichtstäbe 18, die aus einzelnen, miteinander verketteten LEDs bestehen können, die als gerade Stäbe in zugeordnete, nach unten offene Längsnuten 23 in der Bodenwand 4 eingeklipst oder eingeklemmt sind.

Die LEDs bilden eine durchgehende Leuchtkette und sind elektrisch über die beiden Stromkabel 20, 21 in Serie miteinander verbunden.

Weil die Licht aussendenden Lichtstäbe 18 unmittelbar unter den Lichtleitstäben 9 angeordnet sind, sendet deren Licht aussendende Stirnseite 19 ein besonders intensives Licht in den Pfeilrichtungen 17 nach oben hin ab.

Andererseits erleuchten die Lichtstäbe 18 auch die Bodenwand 4, sodass das Licht in den eingezeichneten Pfeilrichtungen 24, 25 zu den umlaufenden Wänden 5-8 gelangt, und dort den Leuchtrahmen erzeugt.

Gemäß der Serienschaltung nach Figur 7 sind die Lichtstäbe 18 elektrisch leitfähig über Verbindungskabel 22 in Serie geschaltet.

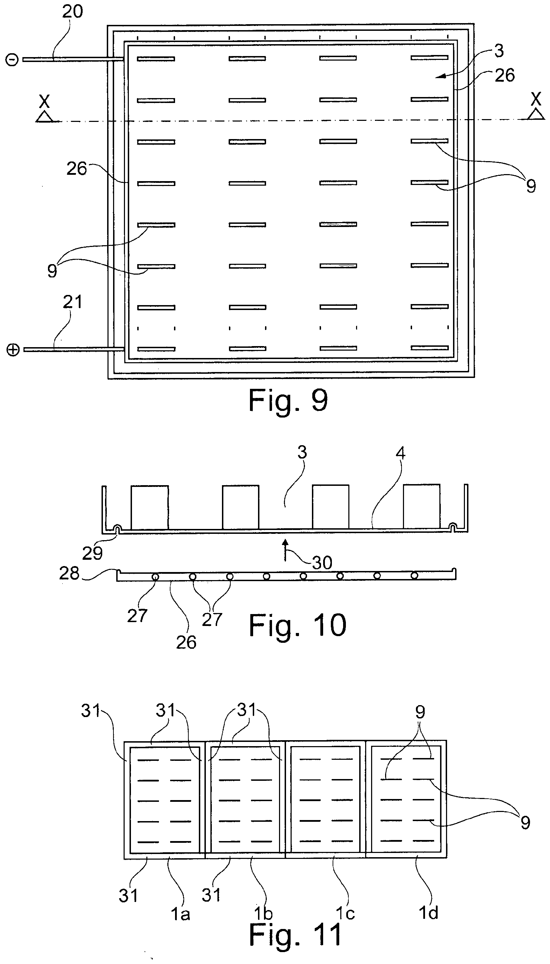

Gemäß Figuren 9 und 10 ist eine andere bevorzugte Ausgestaltung der Lichterzeugung darin zu sehen, dass gemäß Figur 10 eine Lichtplatte 26 vorgeschlagen wird, die zum Beispiel als stromleitende Platine ausgebildet ist, auf deren Oberfläche eine Anzahl von LEDs 27 rasterförmig angeordnet sind. Die so gebildete Lichtplatte 26 wird mit der Bodenwand 4 der Wanne 3 dadurch gekoppelt, dass an der Lichtplatte 26 nach oben gerichtete Rastschenkel 28 angeordnet sind, die in eine zugeordnete, umlaufende Rastnut 29 an der Unterseite der Bodenwand 4 einrastbar sind.

Selbstverständlich ist die Erfindung nicht auf diese Ausführungsform beschränkt. Es können einige Rastpunkte oder Rastflächen vorhanden sein, und es können auch andere lösbare Verbindungen zwischen einer Lichtplatte 26 und der zugeordneten Bodenwand 4 der Wanne 3 erfolgen. Beispielsweise können mechanische Rastmittel, Klebemittel, Haftmittel oder dergleichen zwischen der Lichtplatte 26 und der Bodenwand 4 der Wanne 3 angeordnet sein.

Die Figur 11 zeigt einen Einbauzustand von nebeneinander rasterförmig angeordneten Lichtleitblöcken, wo erkennbar ist, dass nunmehr die hier gezeigten umlaufenden Wände 5-8 einen Leuchtrahmen 31 erzeugen, der das Licht nach oben abgibt.

Die Lichtplatte 26, die das Licht in Pfeilrichtung 30 in die Bodenwand 4 eines einzigen Lichtleitblocks 1 einleitet kann größer oder kleiner als die Fläche der Bodenwand ausgebildet sein. Sie kann jedoch auch wesentlich größer ausgebildet sein und beispielsweise die in Figur 11 dargestellte Anzahl von Lichtleitblöcken 1 bodenseitig überspannen. Somit werden mit einer Lichtplatte 26 mehrere nebeneinander liegende Lichtleitblöcke mit Licht versorgt.

In einer nicht zeichnerisch dargestellten Ausführungsform ist es vorgesehen, dass die Lichteinleitung nicht an der Bodenwand 4 der Wanne 3 erfolgt, sondern an einer oder mehreren der Seitenwände 5,6 und/oder der Stirn- und/oder Rückwand 7,8 erfolgt.

Für die Art der Lichteinleitung in die genannten Wände 5-8 sind alle vorstehend beschriebenen Konstruktionen geeignet, die vorstehend bezüglich der Lichteinleitung in die Bodenwand 4 beschrieben worden sind. Es ist demgemäß sowohl die Lichteinleitung über in Längsnuten 23 in den Wänden 5-8 verlegte Lichtleitstäbe 18 möglich als auch die Lichteinleitung über Lichtplatten 26, die nunmehr gegenüberliegend und in lichtleitendem Kontakt zu einer oder mehreren der Wände 5-8 angeordnet sind.

Die Lichteinleitung in eine oder mehrere der Seitenwände 5-8 hat den Vorteil, dass die Höhe des Lichtleiterblocks 1 nicht vergrößert wird, weil die bodenseitige Halterung von lichtabgebenden Elementen entfällt.

Darüber hinaus kann es jedoch auch vorgesehen sein, dass die Lichtplatte 26 abgewinkelt ist und sowohl eine Lichteinleitung in die Bodenplatte als auch eine Lichteinleitung in ein oder mehrere Wände 5-8 ermöglicht.

Ebenso kann es vorgesehen sein, dass die Längsnuten 23 mit den dort angeordneten Lichtleitstäben 18 sowohl in einer oder mehreren der Wände 5-8 und zusätzlich in der Bodenwand 4 angeordnet sind.

### Zeichnungslegende

- 1: Lichtleitblock
- 2: Lichtleitblock
- 3: Wanne (lichtleitend)
- 4: Bodenwand
- 5: Seitenwand
- 6: Seitenwand
- 7: Stirnwand
- 8: Rückwand
- 9: Lichtleitstab
- 10: Verbindungsfläche
- 11: Füllmaterial
- 12: Füllhöhe
- 13: Lichtquelle
- 14: Pfeilrichtung
- 15: Pfeilrichtung
- 16: Pfeilrichtung
- 17: Pfeilrichtung
- 18: Lichtstab
- 19: Stirnseite (von 9)
- 20: Stromkabel
- 21: Stromkabel
- 22: Verbindungskabel
- 23: Längsnut
- 24: Pfeilrichtung
- 25: Pfeilrichtung
- 26: Lichtplatte
- 27: LED
- 28: Rastschenkel
- 29: Rastnut
- 30: Pfeilrichtung
- 31: Leuchtrahmen

## Patentansprüche

1. Lichtleitblock bestehend aus einer Vielzahl von in einem aushärtbaren Füllmaterial (11) eingegossenen Lichtleitstäben (9), wobei zur Herstellung des Lichtleitblocks (1, 2) das aushärtbare Füllmaterial (11) in eine mindestens halboffene Wanne (3) eingefüllt ist, wobei die Wanne (3) aus einer Bodenwand (4) und umlaufenden Wänden (5-8) besteht, **dadurch gekennzeichnet, dass** die Lichtleitstäbe (9) als Kunststoffspritz- oder -formteile an Flächen (4-8) der aus einem mindestens teilweise oder abschnittsweise lichtleitenden Kunststoff bestehenden Wanne (3) angeformt sind.

2. Lichtleitblock nach Anspruch 1, **dadurch gekennzeichnet, dass** die Lichtleitstäbe (9) an die mindestens teilweise oder abschnittsweise lichtleitende Bodenwand (4) der Wanne (3) angeformt sind.

3. Lichtleitblock nach Anspruch 1 oder 2, **dadurch gekennzeichnet, dass** die Wanne (3) insgesamt aus einem lichtleitenden Kunststoff hergestellt ist und dass mindestens einige Wände (4-8) der Wanne (3) Licht aussendend ausgebildet sind.

4. Lichtleitblock nach einem der Ansprüche 1 bis 3, **dadurch gekennzeichnet, dass** nach der Herstellung des Lichtleitblocks einige der umlaufenden Wände (5-8) der Wanne (3) entfernt sind.

5. Lichtleitblock nach einem der Ansprüche 1 bis 4, **dadurch gekennzeichnet, dass** zur Lichterzeugung an der Bodenwand (4) der Wanne (3) die Bodenwand mit einer Anzahl von lichterzeugenden Lichtstäben (18) koppelbar ist.

6. Lichtleitblock nach einem der Ansprüche 1 bis 4, **dadurch gekennzeichnet, dass** zur Lichterzeugung an der Bodenwand (4) der Wanne (3) die Bodenwand (4) mit einer lichterzeugenden Lichtplatte (26) koppelbar ist.

7. Lichtleitblock nach einem der Ansprüche 1 bis 6, **dadurch gekennzeichnet, dass** in der Bodenplatte (4) der Wanne (3) Durchflussöffnungen zur Ableitung des Oberflächenwassers angeordnet sind.

8. Lichtleitblock nach einem der Ansprüche 1 bis 7, **dadurch gekennzeichnet, dass** der Lichtleitblock (1a-1d) im eingebauten Zustand auf der Sichtseite einen Leuchtrahmen (31) ausbildet.

## Claims

1. Light guiding block consisting of a plurality of light guiding rods (9) embedded in a curable filler material (11), wherein to produce the light guiding block (1, 2), the curable filler material (11) is placed in an at least half-open trough (3), wherein the trough (3) consists of a base wall (4) and peripheral walls (5-8), **characterised in that** the light guiding rods (9) are moulded as plastic injection-moulded parts or plastic moulded parts onto surfaces (4-8) of the trough (3) consisting at least partly or in sections of a light guiding plastic.

2. Light guiding block according to claim 1, **characterised in that** the light guiding rods (9) are moulded onto the at least partly or in sections light guiding base wall (4) of the trough (3).

3. Light guiding block according to claim 1 or 2, **characterised in that** the trough (3) is produced as a whole from a light guiding plastic and **in that** at least some walls (4-8) of the trough (3) are designed to be light emitting.

4. Light guiding block according to one of claims 1 to 3, **characterised in that** after the production of the light guiding block, some of the peripheral walls (5-8) of the trough (3) are removed.

5. Light guiding block according to one of claims 1 to 4, **characterised in that** for generating light at the base wall (4) of the trough (3), the base wall can be coupled to a number of light generating light rods (18).

6. Light guiding block according to one of claims 1 to 4, **characterised in that** for generating light at the base wall (4) of the trough (3), the base wall (4) can be coupled to a light generating light panel (26).

7. Light guiding block according to one of claims 1 to 6, **characterised in that** throughflow openings for discharging the surface water are arranged in the base plate (4) of the trough (3).

8. Light guiding block according to one of claims 1 to 7, **characterised in that** the light guiding block (1a-1d) in the installed state forms a luminous frame (31) on the visible side.

## Revendications

1. Bloc photoconducteur composé d'une multiplicité de tiges photoconductrices (9) coulées dans un matériau de remplissage durcissable (11), le matériau de remplissage durcissable (11) étant versé, pour la fabrication dudit bloc photoconducteur (1, 2), dans un bac (3) au moins semi-ouvert, le bac (3) se composant d'une paroi inférieure (4) et de parois périphériques (5-8),
**caractérisé en ce que** les tiges photoconductrices (9) sont rapportées par moulage, sous la forme de pièces injectées ou moulées en matière plastique, sur les surfaces (4-8) du bac (3) composé d'une matière plastique au moins en partie ou par sections photoconductrice.

2. Bloc photoconducteur selon la revendication 1, **caractérisé en ce que** les tiges photoconductrices (9) sont rapportées par moulage sur la paroi inférieure (4), au moins en partie ou par sections conductrice de lumière, du bac (3).

3. Bloc photoconducteur selon la revendication 1 ou 2, **caractérisé en ce que** le bac (3) est fabriqué dans l'ensemble dans une matière plastique photoconductrice, et **en ce qu'**au moins quelques parois (4-8) du bac (3) sont conçues pour émettre de la lumière.

4. Bloc photoconducteur selon l'une des revendications 1 à 3, **caractérisé en ce qu'**après la fabrication du bloc photoconducteur, quelques-unes des parois périphériques (5-8) du bac (3) sont enlevées.

5. Bloc photoconducteur selon l'une des revendications 1 à 4, **caractérisé en ce que** pour la production de lumière sur la paroi inférieure (4) du bac (3), ladite paroi inférieure est apte à être couplée à un certain nombre de tiges lumineuses génératrices de lumière (18) .

6. Bloc photoconducteur selon l'une des revendications 1 à 4, **caractérisé en ce que** pour la production de lumière sur la paroi inférieure (4) du bac (3), ladite paroi inférieure (4) est apte à être couplée à une plaque lumineuse génératrice de lumière (26).

7. Bloc photoconducteur selon l'une des revendications 1 à 6, **caractérisé en ce qu'**il est prévu dans la plaque inférieure (4) du bac (3) des ouvertures de passage pour l'évacuation de l'eau de surface.

8. Bloc photoconducteur selon l'une des revendications 1 à 7, **caractérisé en ce que** ledit bloc photoconducteur (la-ld), une fois monté, forme sur le côté visible un cadre lumineux (31).
